# EUROPÄISCHE PATENTSCHRIFT

(11) **EP 2 473 313 B1**
(45) Veröffentlichungstag und Bekanntmachung des Hinweises auf die Patenterteilung: **25.06.2014**
(21) Anmeldenummer: 10770967.7
(22) Anmeldetag: 03.09.2010
(51) Int. Cl.: B23K 26/02, B23K 26/22, B23K 26/04

(54) **VERFAHREN ZUM VERSCHWEISSEN VON IM FÜGEBEREICH EINE PUNKT- ODER KURZE LINIENBERÜHRUNG AUFWEISENDEN TEILEN SOWIE FÜGEEINRICHTUNG**
METHOD FOR WELDING PARTS WITH SPOT CONTACT OR SHORT LINE CONTACT IN THE JOINING REGION AND JOINING DEVICE
PROCÉDÉ DE SOUDAGE D'ÉLÉMENTS PRÉSENTANT DANS LA ZONE D'ASSEMBLAGE UN CONTACT PAR POINTS OU LIGNES COURTES, ET DISPOSITIF D'ASSEMBLAGE CORRESPONDANT

(30) Priorität: 04.09.2009 DE 102009040083
(43) Veröffentlichungstag der Anmeldung: 11.07.2012
(73) Patentinhaber: Stadtmüller, Uwe, 74653 Künzelsau (DE)
(72) Erfinder: Stadtmüller, Uwe, 74653 Künzelsau (DE)
(74) Vertreter: Schuster, Müller & Partner
(86) Internationale Anmeldenummer: PCT/DE2010/001041
(87) Internationale Veröffentlichungsnummer: WO 2011/026476

(56) Entgegenhaltungen:
- DE-A1- 10 003 428
- DE-A1-102004 015 250

## Beschreibung

### Stand der Technik

Die Erfindung geht aus von einem Verfahren zum Verschweißen von im Fügebereich eine Punkt- oder kurze Linienberührung aufweisenden Teilen, nachfolgend als drahtförmige Teile bezeichnet, beispielsweise zur Herstellung von eine Drahtgitterstruktur aufweisenden Produkten, wie Drahtkörben, Zaunfeldern, Moniergittern u. ä, aber auch zum Verschweißen von drahtförmigen Teilen mit diese kreuzenden, einen anderen als einen kreisförmigen Querschnitt aufweisenden Grundstrukturen, z. B. Tragstreben von Schutzgittern für Axiallüfter u. ä.

Gitterförmige Strukturen, bei denen im Berührungs- bzw. Kreuzungspunkt der das Gitter bildenden drahtförmigen Teile in der Regel lediglich eine Punkt- allenfalls eine kurze Linienberührung vorliegt, werden überwiegend durch Widerstands- bzw. Kondensatorentladungsschweißen hergestellt. Bekannt ist ein Verfahren zum Verschweißen von sich kreuzenden Drähten in deren Kreuzungspunkt, bei dem die vorgeformten Drähte aufeinander gelegt und im Kreuzungspunkt gezielt zusammengepresst werden. Dem jeweiligen Kreuzungspunkt wird über an diesem anliegende Elektroden eine hohe Stoßstromenergie durch Entladung eines Kondensators über einen Impulstransformator zugeführt (Kondensatorentladungsschweißen). Infolge des Anpressdrucks verringert sich die Dicke der übereinander liegenden Drähte beim Aufschmelzen des Materials, so dass eine innige flächige Verbindung zwischen den Drähten entsteht. Die Vorrichtung zur Durchführung des Kondensatorentladungsschweißverfahrens besteht aus einer unteren Elektrode, auf der der Schweißling aufliegt, einer dieser gegenüberliegenden oberen Elektrode und einer Hubeinrichtung zum Gegeneinanderverfahren der beiden Elektroden (DE 100 03 428 A1).

Der Nachteil dieses Verfahrens besteht in den hohen Aufwendungen, den die jeweils typenspezifisch anzufertigenden Schweißvorrichtungen erfordern. Insbesondere müssen die beiden Elektroden der jeweiligen Geometrie des Produkts angepasst werden. Die hohe Typen- und Variantenvielfalt bei oft nur vergleichsweise geringen Stückzahlen führt daher zu erheblichen Fixkosten, die bei dem hohen Preisdruck häufig durch die Produkte selbst nicht getragen werden können.

Bekannt ist ferner eine Spannvorrichtung zum Schweißen von Werkstücken, bestehend aus mindestens einem ersten Spannelement und mindestens einem zweiten Spannelement, zwischen denen mindestens ein Werkstück gehalten ist, wobei ein Laserstrahl relativ zum Werkstück beweglich ist. Das erste Spannelement ist als Spannfinger ausgebildet und greift auf der Seite an dem Werkstück an, auf der der Laserstrahl auf das Werkstück wirkt. Das zweite Spannelement ist als Spannrolle ausgebildet und liegt auf der dem Laserstrahl abgewandten Seite an dem Werkstück an (DE 10 2004 015 250 A1).

### Die Erfindung und ihre Vorteile

Das erfindungsgemäße Verfahren mit den Merkmalen des Anspruches 1 hat demgegenüber den Vorteil, dass der Einsatz der Lasertechnologie das Verschweißen der zumindest im Fügebereich drahtförmigen Teile zu einer nahezu beliebigen Geometrie mit einem im Vergleich zum Widerstands- bzw. Kondensatorentladungsschweißen deutlich geringeren Aufwand ermöglicht. Zum Laserschweißen wird natürlich ebenso wie bei den vorgenannten Verfahren des Standes der Technik eine geeignete Vorrichtung benötigt. Diese muss aber lediglich die zu verschweißenden Teile aufnehmen, fixieren sowie den erforderlichen leichten Anpressdruck aufbringen. Unterschiedliche Geometrien der Produkte erfordern jedoch keine Änderungen an der Laserschweißapparatur selbst.

Die Laserschweißtechnologie ist zwar schon lange bekannt und wird in den verschiedensten Anwendungsgebieten auch ohne Verwendung von Zusatzwerkstoff erfolgreich eingesetzt. Bisher ist es aber nicht gelungen, Verbindungen von sich kreuzenden drahtförmigen Teilen, also solchen Teilen, die in ihrem Kreuzungspunkt und damit in ihrem Fügebereich lediglich eine punkt-, oder allenfalls eine kurze linienförmige Berührung aufweisen, qualitätsgerecht herzustellen. Bekannt ist nämlich, dass beim Verschweißen von Teilen mittels einer Laserstrahlquelle ohne Zusatzwerkstoff die beiden Teile dicht aufeinander liegen müssen, d. h. der Laserstrahl die Materialien in der Grenzzone nur dann zum Aufschmelzen bringt, wenn zwischen den Teilen kein nennenswerter Luftspalt vorhanden ist. Das ist jedoch bei drahtförmigen Teilen, die miteinander verschweißt werden sollen, nicht gegeben. Hier ist lediglich eine punktförmige Kontaktstelle vorhanden, rechts und links von dieser befindet sich Luft. Auch die kurze linienförmige Berührung, beispielsweise bei der Verbindung von Drahtringen auf einer einen rechteckigen Querschnitt aufweisenden Tragstrebe, ist für das Laserschweißen nicht ausreichend.

Damit das vorteilhafte Laserschweißen trotzdem auch zum Verschweißen von drahtförmigen Teilen angewendet werden kann, wird bei dem erfindungsgemäßen Verfahren das Laserschweißgerät oberhalb des Kreuzungspunktes positioniert. Der Laserstrahl geht durch das obere Teil bis zum Kreuzungspunkt hindurch und schmilzt das Material im Brennpunkt, der oberhalb der Fügestelle aber immer noch innerhalb des oberen Teils fokussiert wird, auf. Durch das Hindurchführen des Laserstrahls durch das obere Teil wird vermieden, dass seine Energie durch einen etwaigen Spalt verringert wird. Vielmehr trifft er von innen her exakt auf die Kreuzungsstelle. Um zu verhindern, dass das Material dabei aus dem "offen angeschmolzenen" oberen Teil wegläuft, wird dieses Teil nur im mittleren Bereich seines Querschnitts aufgeschmolzen, während an den beiden Flanken keine Aufschmelzung stattfindet, so dass das flüssige Material in einer Art Mirkoschmelze im Querschnitt eingeschlossen ist, wobei jedoch in der Berührungszone bereits ein Wärmeeintrag in das untere Teil erfolgt, dessen Material an dieser Stelle zumindest im Grenzbereich zur Fügestelle aufschmilzt.

Daher ist es besonders wichtig, dass in dieser Phase des Aufschmelzens des Materials des oberen und unteren Teils der Laserschweißvorgang noch durch ein leichtes Gegeneinander Drücken der drahtförmigen Teile begleitet wird, das jedoch außerhalb des Kreuzungspunktes, d. h. der Fügestelle, eingeleitet wird. Dazu werden durch seitlich der Fügestelle angreifende Nachsetzkräfte die Teile unter eine leichte Vorspannung gesetzt, unter der sie sich geringfügig aufeinander zu bewegen. Dadurch vergrößert sich die aufgeschmolzene Zone und damit die Berührungsfläche der beiden Teile wesentlich. Bei entsprechender Materialpaarung bildet sich eine ausgeprägte Schweißnuss aus, die wiederum für eine qualitativ gute Schweißverbindung spricht. Die hier aufzubringenden Nachsetzkräfte sind deutlich geringer als die beim Kondensatorentladungsschweißen benötigten Andruckkräfte, da hier lediglich die Berührung der beiden Teile und das "Nachsetzen" des oberen Teils in das aufgeschmolzene Material des unteren Teils hinein erreicht werden muss. Die Nachsetzkräfte müssen bis zur Erstarrung des Materials in der Fügestelle aufrecht erhalten werden.

Nach einer zusätzlichen vorteilhaften Ausgestaltung der Erfindung wird der Laserstrahl orthogonal auf die zu fügenden Teile gelenkt. Dadurch ist gewährleistet, dass exakt der mittig über deren Berührungsstelle liegende Bereich des oberen Teils aufgeschmolzen wird.

Nach einer zusätzlichen vorteilhaften Ausgestaltung der Erfindung wird die auf die miteinander zu verschweißenden Teile aufzubringende Nachsetzkraft durch eine Federkraft aufgebracht. Im zusammengedrückten Zustand liefern diese die erforderliche Vorspannung der Teile, so dass sich die Teile infolge der Ausbildung der Schmelzzone einander annähern, wobei die Federkraft bis zum Erstarren des aufgeschmolzenen Materials gehalten wird.

Nach einer anderweitigen vorteilhaften Ausgestaltung der Erfindung werden nach dem Erstarren der Schmelze in der Fügestelle zusätzlich noch die Kehlbereiche der Fügestelle ein- oder mehrseitig verschweißt. Zur Herstellung einer solchen Seitenverschweißung wird mit dem Laserstrahl, ausgehend vom Drahtinneren, ein Teil des noch stehenden Querschnitts des oberen drahtförmigen Teils angeschmolzen, ohne jedoch die Teile weiter aufeinanderzu zu bewegen. Zur Herstellung mehrer Seitenverschweißungen wird dieser Vorgang nach einer radialen Verstellung des Laserstrahls wiederholt. Seitenverschweißungen vergrößern den Anbindungsquerschnitt der Teile in der Fügezone und erhöhen damit die Festigkeit der Schweißverbindung.

Nach einer anderweitigen vorteilhaften Ausgestaltung der Erfindung wird der Laserstrahl durch einen Scanner gesteuert, der die Koordinaten der Fügestellen erfasst. Dadurch wird die Fertigungszeit von Erzeugnissen mit einer Vielzahl von Fügestellen, wie z. B. Drahtgitter, wesentlich verkürzt.

Nach einer besonders vorteilhaften Ausgestaltung der Erfindung werden die miteinander zu verbindenden Teile zunächst lediglich grob zueinander positioniert. Die Feinpositionierung in Verbindung mit der Arretierung erfolgt dann unmittelbar vor dem Laserschweißvorgang im Zuge des Gegeneinander Drückens der Teile. Das hat den Vorteil, dass das an sich aufwändige manuelle Einlegen der Teile in die Vorrichtung wesentlich vereinfacht und dadurch auch zeitlich verkürzt wird.

Mit einer Vorrichtung zur Durchführung des Verfahrens, welche kein Gegenstand der Ansprüche ist, erfolgt die Aufnahme, Positionierung, Fixierung und das Gegeneinander Drücken der Teile in einer separaten Einrichtung, die unabhängig von der eigentlichen Schweißapparatur zum Einsatz kommt. Die Krafteinleitung beim Gegeneinander Drücken erfolgt seitlich der Fügestelle und somit außerhalb der Eintrittsstelle des Lasers in das obere Teil. Dadurch braucht lediglich diese separate Einrichtung an die Form des Endprodukts angepasst zu werden, wodurch sich die Kosten der Gesamtvorrichtung im Vergleich zu Kondensatorentladungsschweißvorrichtungen deutlich reduzieren.

Der Laser kann mit einem Scanner kombiniert sein, der sehr schnell die Positionen der Fügestellen ermittelt, auf die dann der Laserstrahl ausgerichtet wird, so dass sich die Schweißzeit, die zum Verbinden sämtlicher Fügestellen des Fertigprodukts benötigt wird, wesentlich verkürzt.

Bei Produkten, die größer als das Scannerfeld sind, wird der Scanner an einem Roboter befestigt und durch diesen verschoben, was dann ebenfalls rechnergestützt schnell und mit hoher Genauigkeit möglich ist.

Die Mittel zum Gegeneinander Drücken der Teile können aus nachgiebigen federnden Elementen bestehen, die außerhalb der Fügestellen auf das bzw. die oberen Teile wirken und so eine Vorspannung auf die Teile aufbringen, so dass sich die beiden Teile aufeinander zu bewegen.

Es ist aber auch möglich, anstelle der federnden Elemente ein elastisches Material zu verwenden, das auf einem Träger aufgebracht ist, der sich über sämtliche oder auch nur über einen Teil der Fügestellen erstreckt. Diese Ausführung ist einfacher und damit auch billiger als die Verwendung von federnden Elementen. Außerdem entfällt die genaue Positionierung, wie sie die Druckfedern noch erfordern, denn ein elastisches Band berührt auf jeden Fall die gegeneinander zu drückenden drahtförmigen Teile. Mit dem elastischen Material können auch Toleranzen auf einfache Weise ausgeglichen werden. Das elastische Material hat ferner den Vorteil, dass es für die oberen Teile einen Schutz vor Beschädigung bietet.

Die Mittel zum gegeneinander Drücken der Teile können an einem Niederhalter befestigt sein, der soweit an die oberen drahtförmigen Teile herangefahren wird, dass die Mittel zum gegeneinander Drücken mit der erforderlichen Vorspannung an den oberen Teilen anliegen. Dabei ist es vorteilhaft, wenn der Niederhalter zumindest in Teilbereichen in der Form der Oberfläche des herzustellenden Produkts ausgebildet ist. In diesem Bereich können dann die Mittel zum Niederdrücken der oberen drahtförmigen Teile die gleiche Länge aufweisen, was insbesondere bei der Verwendung eines elastischen Bandes zum Aufbringen der Vorspannung von Vorteil ist.

Die Mittel zum Gegeneinander Drücken der Teile können auch an einer Vorrichtung zur Feinpositionierung und Fixierung dieser Teile in Schweißposition angeordnet sein. Die Teile werden nur grob in eine Basisvorrichtung eingelegt. Die Feinpositionierung und Fixierung übernimmt diese Vorrichtung, die hierzu eine dementsprechende Gestalt aufweist.

Eine derartige formgebende Vorrichtung besteht aus einer Kammleiste, deren Zinken am freien Ende angeschrägt sind. Die dazwischen liegenden Zahnlücken verengen sich auf die Dicke der zu positionierenden Teile, wobei der enge Abstand dann auch der gewünschten Position des beim Niederdrücken der Kammleiste in die Zahnlücke hinein gleitenden Teils entspricht. Vorteilhafterweise ist der Zahngrund der Zahnlücke zur Aufbringung der Nachsetzkraft mit einem elastischen Material versehen.

Die Mittel zum gegeneinander Drücken der oberen und unteren Teile für die Aufbringung der Nachsetzkraft können lediglich an einer einzelnen Fügestelle ausgestaltet sein. Eine solche Vorrichtung ist zwar verhältnismäßig einfach, muss aber immer mit dem Laserstrahl von Fügestelle zu Fügestelle bewegt und positioniert werden.

Vorteilhafter ist es, den Niederhalter auf mehrere Fügestellen gleichzeitig wirken zu lassen, wobei dieser dann allerdings, wie oben schon erwähnt, der Gestalt des Bereichs, in dem sich die Fügestellen befinden, angepasst sein muss. Dadurch können die Fertigungszeiten der Produkte verkürzt werden.

Besonders vorteilhaft ist es, den Niederhalter als ein Gesamtwerkzeug auszubilden, mit dem sämtliche Fügestellen eines Produkts gleichzeitig mit der erforderlichen Nachsetzkraft beaufschlagt werden. Bei dieser Ausgestaltung der Vorrichtung weist also der Niederhalter die Gestalt der Oberfläche des Produkts auf. Hier ist es auch besonders sinnvoll, den Niederhalter die Funktion der Feinpositionierung der oberen Teile mit ausüben zu lassen.

Weitere Vorteile und vorteilhafte Ausgestaltungen der Erfindung sind der nachfolgenden Beispielbeschreibung, den Zeichnungen und den Ansprüchen entnehmbar.

### Zeichnung

Ein Ausführungsbeispiel der Erfindung ist anhand der Herstellung eines Schutzgitters für Axiallüfter in den Zeichnungen dargestellt und im Folgenden näher beschrieben. Es zeigen
- Fig. 1: ein erfindungsgemäß hergestelltes Schutzgitter,
- Fig. 2: die Anordnung eines Niederhalters auf in Scheißposition zu einer Tragstrebe angeordneten Drahtringen,
- Fig. 3: das Prinzip der Einleitung der Nachsetzkraft in die Drahtringe,
- Fig. 4: die Phasen des Laserschweißprozesses,
- Fig. 5: eine Vorrichtung zur Aufbringung der Andrückkraft,
- Fig. 6: eine Weiterentwicklung der Vorrichtung,
- Fig. 7: eine Fügeeinrichtung zur Herstellung eines Schutzgitters für Axiallüfter durch Laserschweißen im geöffneten Zustand und
- Fig. 8: diese Fügeeinrichtung im geschlossenen Zustand.

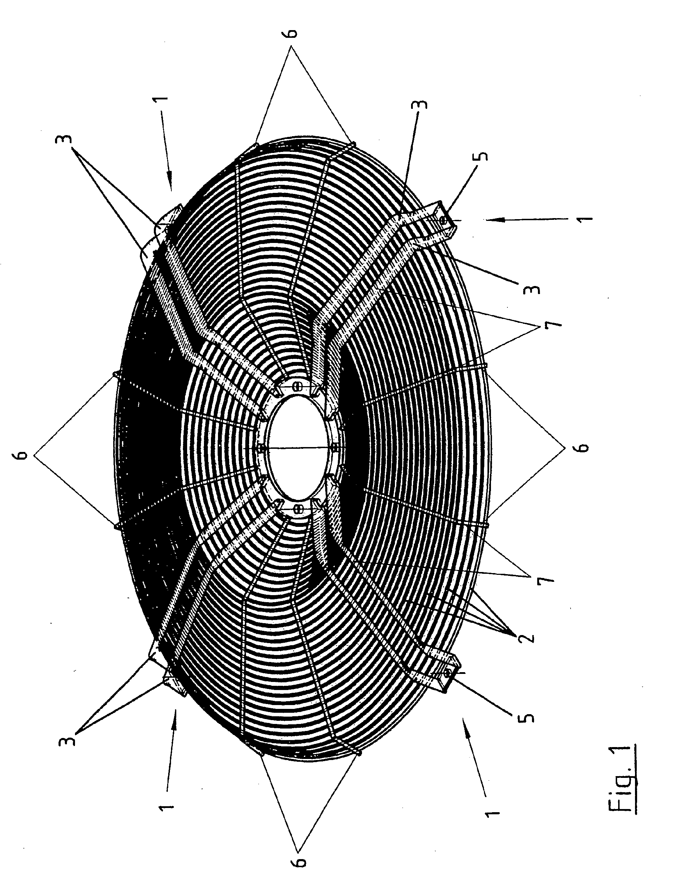

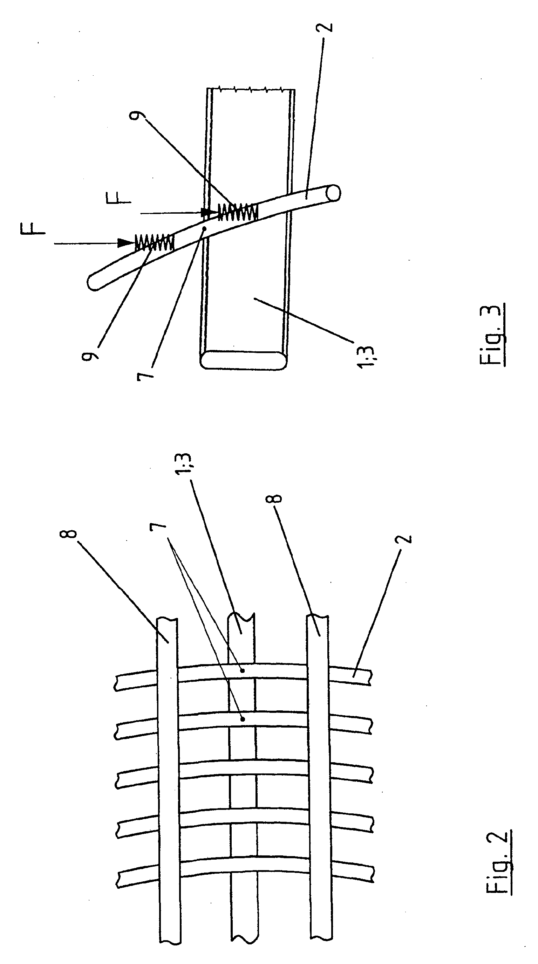

Fig. 1 zeigt ein räumliches Schutzgitter, das aus vier Tragstreben 1 besteht, auf die konzentrische Gitterringe 2 aufgeschweißt sind. Jede Tragstrebe 1 besteht aus zwei parallel geführten, zweimal über die hohe Kante mit unterschiedlichen Winkeln abgewinkelten Flachprofilen 3, deren innere Enden mit einem inneren Flanschring 4 und deren äußere Enden zu einem äußeren Flanschring 5 miteinander verbunden sind. Zwischen den Tragstreben 1 sind in gleicher Teilung jeweils zwei Rundstreben 6 angeordnet. Die Gitterringe 2 sind jeweils an ihren Kreuzungspunkten mit den Flachprofilen 3 und den Rundstreben 6 durch Laserschweißen miteinander verschweißt (Fig. 2). Der Einfachheit halber wird auch die kurze Linienberührung zwischen Gitterring 2 und Flachprofil 3 als ein Kreuzungspunkt angesehen. Beide Kreuzungspunkte sind nachfolgend als Fügestelle (7) bezeichnet.

Die Fig. 2 und 3 zeigen das Prinzip der Aufbringung der den Laserschweißprozess begleitenden Nachsetzkraft. In Fig. 2 ist hierzu schematisch ein Ausschnitt aus dem in Fig. 1 dargestellten Schutzgitter gezeigt, wobei die Tragstrebe 1 der Einfachheit halber hier nur aus einem einzigen Flachprofil 3 bestehend dargestellt ist, in der Zeichnung jedoch durch die Angabe der Bezugszahl 3 nach einem Semikolon hinter der Bezugszahl 1 darauf verwiesen wird, dass es sich hier bei dieser Tragstrebe 1 auch um das Flachprofil 3 handelt. In gleichen Abständen zueinander sind die Gitterringe 2 auf der Tragstrebe 1 positioniert, wobei sie die Tragstrebe 1 in einem Winkel von 90° kreuzen. Beiderseits der Fügestellen 7 liegt ein Niederhalter 8 auf den Gitterringen 2 auf. Die von dem Niederhalter 8 auf die Gitterringe 2 aufgebrachte Andrückkraft F ist in Fig. 3 durch die beiden Federelemente 9 veranschaulicht.

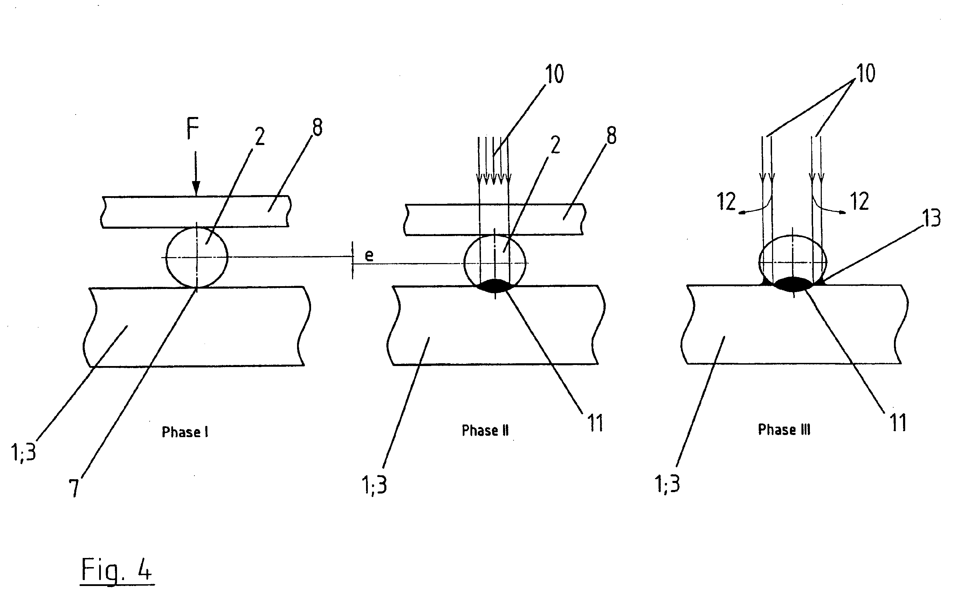

Fig. 4 zeigt das Schema der Phasen des Laserschweißprozesses am Beispiel einer einzelnen Schweißstelle, bei der das Flachprofil 3 der Tragstrebe 1 längs geschnitten und der Gitterring 2 quer zu seiner Längsachse geschnitten dargestellt ist. Zusätzlich ist der Mittelpunkt des Gitterringes 2 durch Strich-Punkt-Linien gekennzeichnet. In der Phase I werden in einer nicht näher dargestellten Vorrichtung Tragstrebe 1 und Gitterring 2 zueinander in Position gebracht und mit der Andrückkraft F, die von dem bezüglich der Bildebene hinter und vor der Fügestelle 7 befindlichen Niederhalter 8 auf den Gitterring 2 aufgebracht wird, gegeneinander gedrückt. In der Phase II wird ein Laserstrahl 10 senkrecht von oben und mittig in den Gitterring 2 eingebracht und so fokussiert, dass er den unteren mittleren Bereich des Querschnitts des Gitterrings 2 aufschmilzt. An den beiden Flanken findet keine Aufschmelzung statt, so dass das flüssige Material in einer Mikroschmelze in diesem Bereich des Gitterrings 2 eingeschlossen ist und deshalb nicht weglaufen kann. Die in dieser Mikroschmelze vorhandene Wärmeenergie wird natürlich durch Wärmeleitung auf den unmittelbar darunter befindlichen Oberflächenbereich der Tragstrebe 1 übertragen, so dass auch dieser aufschmilzt. Unter Wirkung der Andrückkraft F dringt der Gitterring 2 in den aufgeschmolzenen Oberflächenbereich der Tragstrebe 1, die in der Vorrichtung arretiert ist und daher nicht ausweichen kann, ein, wobei er einen Nachsetzweg e zurücklegt. Dabei vergrößert sich die Berührungsfläche zwischen Tragstrebe 1 und Gitterring 2 merklich, und es bildet sich in diesem Bereich eine Schweißnuss 11 aus. Die Andrückkraft F wird bis zum Erstarren der Schmelze aufrechterhalten.

Die Festigkeit der Schweißstelle kann dadurch noch erhöht werden, indem, wie in Phase III der Fig. 4 dargestellt, in den Randbereichen des Gitterrings 2 Kehlnähte erzeugt werden. Hierzu wird nach dem Erstarren der Schweißnuss 11 der Laserstrahl 10 vom Innern des Gitterrings 2 heraus in dessen Randbereiche gelenkt. Die dazu gewählte Schweißrichtung wurde mit 12 gekennzeichnet. Dadurch, dass der Gitterring 2 zur Tragstrebe 1 durch die Schweißnuss 11 fixiert ist, wird die sich aus dem Randbereich bildende Schmelze in den sich nach unten vorhandenen Hohlraum der Kehle ergießen und dort eine Seitenverschweißung 13 bilden. Dieser Vorgang kann auf beiden Seiten des Querschnitts des Gitterrings 2 erfolgen.

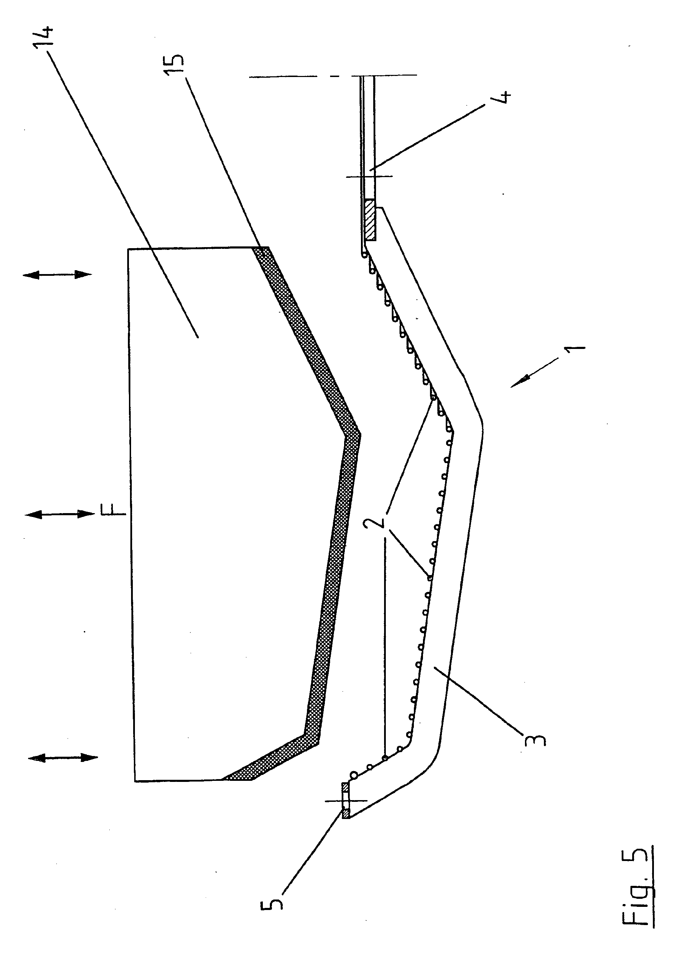

Fig. 5 zeigt die schematische Darstellung einer Vorrichtung zur Aufbringung der Andrückkraft F am Beispiel der Herstellung eines Schutzgitters für Axiallüfter, wie es in Fig. 1 dargestellt ist. Die Tragstreben 1 sind mit ihrer Oberseite nach unten liegend angeordnet. Auf der Unterseite der Tragstrebe 1 sind die Gitterringe 2 in Schweißposition fixiert. Oberhalb der Gitterringe 2 ist ein Niederhalter 14 angeordnet, dessen Unterseite im Bereich der Gitterringe 2 der Kontur der Tragstreben 1 angepasst und mit einem Elastomerband 15 versehen ist. Beim Absenken des Niederhalters 14 drückt das Elastomerband 15 im Fügebereich auf die Gitterringe 2 und überträgt auf diese die Andrückkraft F. Aufgrund seiner Nachgiebigkeit passt es sich schnell den Gitterringen 2 an und gleicht so evtl. Toleranzen aus. Durch die Gestalt des Niederhalters 14 können sämtliche auf einer Tragstrebe 1 aufliegenden Gitterringe 2 mit einem einzigen Hub des Niederhalters 14 auf dieser Tragstrebe 1 mit der Andrückkraft F auf die Tragstrebe 1 gedrückt werden. Bei Verwendung nachgiebiger federnder Elemente, wie es das Elastomerband 15 darstellt, muss die Andrückkraft F so groß gewählt werden, dass auch nach dem Einsinken der Gitterringe 2 in die Tragstrebe 1 eine ausreichende Restspannung bis zum Erstarren der Schmelze gewährleistet ist.

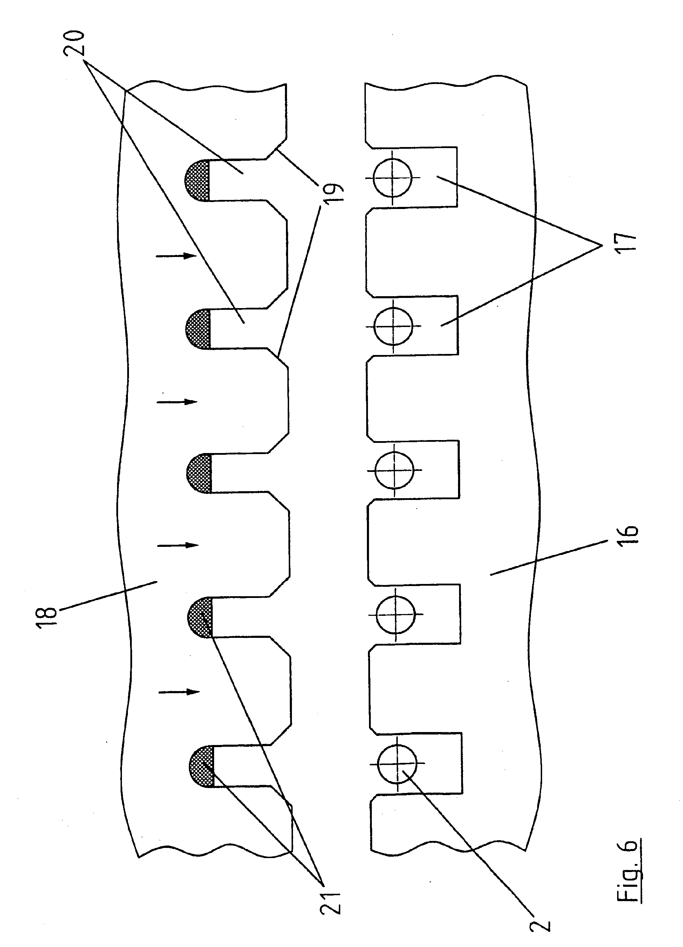

Fig. 6 zeigt eine Weiterentwicklung der Vorrichtung aus Fig. 5 in der Weise, dass die Mittel, mit denen die Andrückkraft F auf die miteinander zu verbindenden Teile aufgebracht wird, auch deren genaue Positionierung und Arretierung übernimmt. In Fig. 6 sind lediglich die hierfür relevanten Teile der Vorrichtung dargestellt, nämlich ein Unterteil 16, das die Gitterringe 2 in Einlegenuten 17 aufnimmt. Die vertikale Position der Gitterringe 2, die der Auflagefläche der hier nicht dargestellten Tragstreben entspricht, ist durch die Tiefe der Einlegenuten 17 bestimmt, deren Breite allerdings deutlich größer als der Durchmesser der Gitterringe 2 ausgeführt ist, so dass sich die Gitterringe 2 leicht in das Unterteil 16 einlegen lassen. Sie fallen ohne weiteres auf den Boden der Einlegenuten 17 und sind so in ihrer radialen Lage grob vorpositioniert. Ferner weist die Vorrichtung einen Niederhalter 18 auf, in den von dessen Unterseite ausgehende jeweils mit einer Zentrierphase 19 versehene Fixiernuten 20 eingearbeitet sind. Das Ende der Fixiernuten 20 ist halbkreisförmig ausgebildet und mit einer Elastomereinlage 21 versehen.

Wie aus Fig. 5 ebenfalls zu erkennen, ist die Breite der Fixiernuten 20 im Niederhalter 18 geringer als die der Einlegenuten 17 des Unterteils 16. Sie entspricht zuzüglich einer geringfügigen Plustoleranz dem Durchmesser der Gitterringe 2. Der Niederhalter 18 ist gegenüber dem Unterteil 16 in Richtung der Achse der Gitterringen 2 um die Breite der Fügestelle versetzt. Beim Absenken des Niederhalters 18 werden die in den Einlegnuten 17 des Unterteils 16 lose liegenden Gitterringe 2 von den Zentriephasen 19 mittig zu den schmaleren Fixiernuten 20 positioniert, so dass sie dabei ihre endgültige radiale Position einnchmen. Bei fortgesetzter Abwärtsbewegung des Niederhalters 18 setzt die Elastomereinlage 21 auf den Gitterringen 2 auf und wird dabei so weit zusammengedrückt bis die erforderliche Vorspannung zum Gegeneinanderdrücken von Gitterringen 2 und Tragstreben 1 erreicht ist. Nunmehr werden, wie oben beschrieben, die Gitterringe 2 mit den Tragstreben 1 durch Laserschweißen verbunden, während die Vorspannung durch den Niederhalter 18 beibehalten wird, so dass es zum Nachsetzen der Gitterringe 2 in Richtung der Tragstreben 1 kommt, und die Vorspannung bis zum Erstarren der Schmelze in der Fügestelle aufrecht erhalten bleibt. Ggf. muss der geringe Nachsetzweg e der Gitterringe 2 von dem Unterteil 16 mitgemacht werden. Andererseits ist es auch möglich, nach dem Einlegen der Gitterringe 2 in das Unterteil 16 die ebenfalls in einer Aufnahme positionierten Tragstreben von unten gegen die Gitterringe 2 zu fahren, so dass diese leicht von dem Grund der Einlegenuten 17 abgehoben werden und dieser beim Nachsetzen der Gitterringe 2 dann nicht mehr im Wege ist.

Das nachfolgende zusätzliche Beispiel beschreibt eine Vorrichtung, die geeignet ist, ein Schutzgitter für einen Axiallüfter durch Laserschweißen in einer einzigen Fügeeinrichtung komplett, d. h. mit sämtlichen Streben sowie innerem Flanschring 4 und äußerem Flanschring 5, nach dem erfindungsgemäßen Verfahren herzustellen.

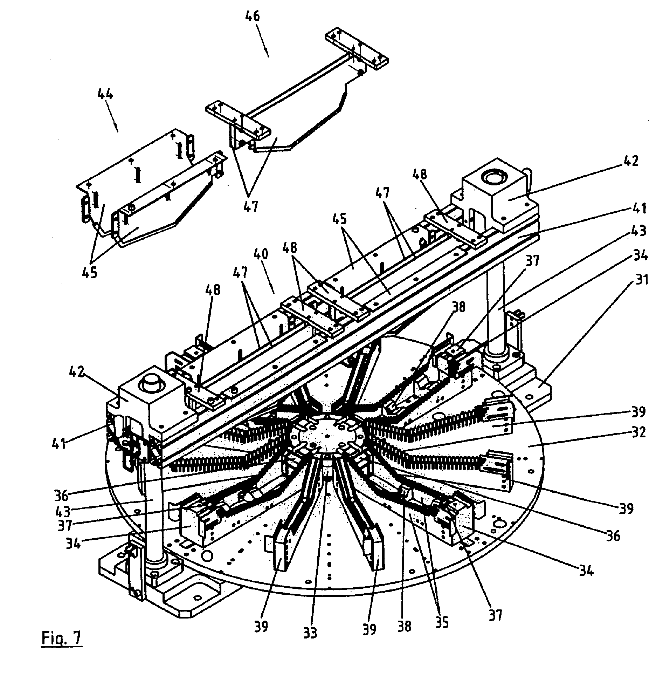

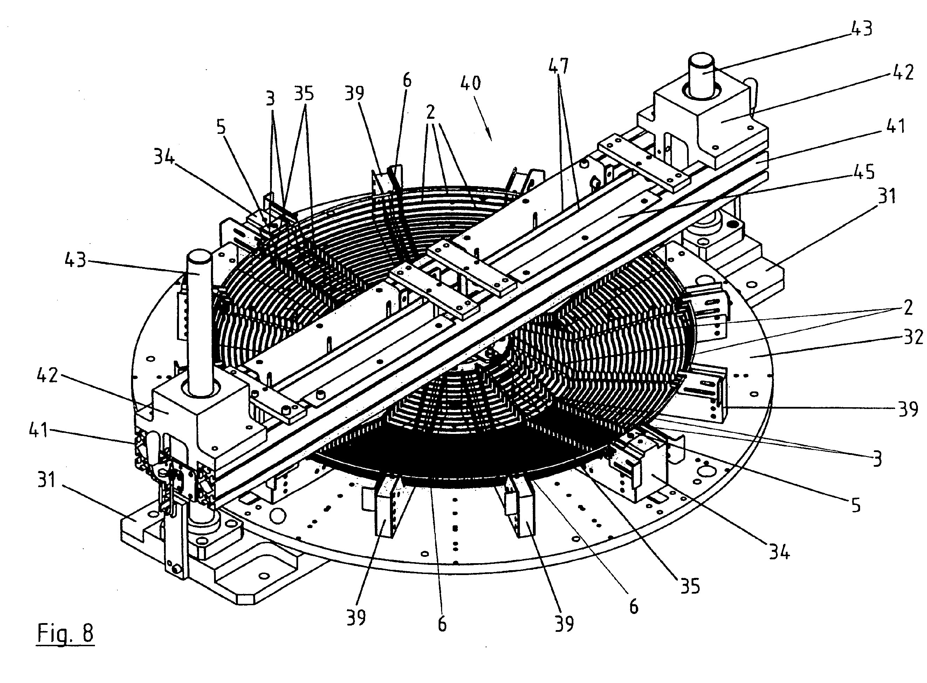

Bei den Fig. 7 und 8 handelt es sich um die identische Darstellung der Fügeeinrichtung, einmal in geöffneter Stellung (Fig. 7) und zum andern in geschlossener Stellung (Fig. 8), wobei in der geschlossenen Stellung sämtliche miteinander zu verschweißenden Teile eingelegt sind. Wie aus den Fig. 7 und 8 zu erkennen, besteht diese Fügeeinrichtung aus einer Konsole 31, die eine Grundplatte 32 drehbar aufnimmt. Im Drehpunkt der Grundplatte 32 ist eine Innenflanschaufnahme 33 angeordnet. Von dieser gehen strahlenförmig nach außen mit einer Teilung von 90° vier Aufnahmevorrichtungen 34 für die Tragstreben 1, von denen sich jeweils zwei diametral gegenüber liegen. Jede Aufnahmevorrichtung 34 besteht aus einer rechten und einer linken Kammleiste 35, die Gitterringe 2, wie in Fig. 6 gezeigt und beschrieben, aufnehmen und grob positionieren. Vor dem Einlegen der Gitterringe 2 werden jedoch zwei entsprechend der Form der Tragstrebe 1 über die hohe Kante gebogene und an ihrem inneren und äußeren Ende zur Verbindung mit dem inneren und dem äußeren Flanschring 4, 5 entsprechend gestaltete Flachprofile 3 in die Aufnahmevorrichtung 34 eingelegt. Hierzu weist die Aufnahmevorrichtung 34 eine der Innennanschaufnahme 33 zugewandt innere Aufnahme 36, eine am äußeren Ende angeordnete äußere Aufnahme 37 sowie Halteelemente 38 auf. Die äußeren Aufnahmen 37 dienen gleichzeitig zur Aufnahme von Laschen, mit denen die äußeren Enden der Flachprofile 3 zu dem äußeren Flanschring 5 verschweißt werden.

Zwischen den Aufnahmevorrichtungen 34 für die Tragstreben 1 sind in gleichmäßiger Teilung Einlegevorrichtungen 39 für die Rundstreben 6 (siehe auch Fig. 1) angeordnet. Die Einlegevorrichtungen 39 sind ähnlich aufgebaut wie die Aufnahmevorrichtungen 34, nur dass sie lediglich eine Rundstrebe 6, die in der gleichen Weise wie die Flachprofile 3 in der dem Schutzgitter angepassten Form bereits vorgebogen ist, aufnehmen. Zur groben radialen Vorpositionierung der Gitterringe 2 sind sie ebenfalls beiderseits mit Kammleisten 35 versehen.

Oberhalb der Grundplatte 32 ist ein den gesamten Durchmesser der Grundplatte 32 überspannendes Joch 40 zentralsymmetrisch zu dessen Drehachse angeordnet. Es besteht aus zwei parallel geführten Profilkörpern 41, die jeweils an ihrem äußeren Ende über einen Führungskörper 42 miteinander verbunden sind. Jeder Führungskörper 42 ist auf einer in der Konsole 31 mit gleichem Abstand zur Drehachse befestigten Führungswellen 43 gleitend gelagert, so dass das Joch 40 in Richtung der Drehachse der Grundplatte 32 vertikal beweglich ist und dabei gleichzeitig jeweils zwei gegenüberliegende Aufnahmevorrichtungen 34 oder Einlegevorrichtungen 39 überspannt.

In dem Zwischenraum zwischen den beiden Profilkörpern 41 sind beiderseits der Drehachse der Grundplatte 32 sämtliche zum Aufbringen der Nachsetzkräfte beim Verschweißen der Gitterringe 2 mit den Flachprofilen 3 und den Rundstreben 6 erforderlichen Niederhalter in ihrer Höhe einstellbar angeordnet. Zur Verdeutlichung des Aufbaus der Niederhalter sind diese in Fig. 7 zusätzlich als separates Detail im ausgebauten Zustand dargestellt. Dabei handelt es sich um einen äußeren Niederhalter 44, der aus zwei parallelen an ihrer Oberkante abgewinkelten Niederhalterblechen 45 mit weitem Abstand besteht, und einen inneren Niederhalter 46, der wiederum aus zwei parallelen flachen Niederhalterblechen 47 mit engem Abstand besteht, die an ihren Enden über einen Halter 48 miteinander verbunden sind. Während die abgewinkelten Niederhalterbleche 45 mit ihrer Abwinkelung jeweils auf einem Profilkörper 41 aufliegen und an diesem befestigt sind, ist der innere Niederhalter 46 symmetrisch in den Zwischenraum zwischen den abgewinkelten Niederhalterbelchen 45 des äußeren Niederhalters 44 eingesetzt, so dass die flachen Niederhalterbleche 47 mit ihrem Halter 48 auf beiden Profilkörpern 41 fixiert sind. Die Unterkante der Niederhalterbleche 45 und 47 ist der Form der Tragstrebe 1 bzw. der Rundstrebe 6 angepasst. Der Abstand der Niederhalterbleche 45 bzw. 47 zueinander ist durch den Abstand der Flachprofile 3 der Tragstrebe 1 bestimmt. Dabei ist der Abstand der abgewinkelten Niederhalterbleche 45 größer als die Breite der Tragstrebe 1, so dass sie beim Absenken des Jochs 40 außerhalb der Tragstrebe 1 auf die Gitterringe 2 aufsetzen, während der Abstand der flachen Niederhalterbleche 47 kleiner ist als der Abstand der Flachprofile 3 zueinander, so dass sie innerhalb der Tragstrebe 1, also zwischen ihren beiden Flachprofilen 3, aufsetzen.

Die Nachsetzkraft, mit der die Gitterringe 2 während des Schweißprozesses auf die Tragstreben 1 sowie die Rundstreben 2 gedrückt werden, wird von dem Joch 40 über die Niederhalter 44 und 46 auf die Gitterringe 2 übertragen. Dabei drücken alle Niederhalterbleche 45, 47 mit der gleichen Kraft auf die Gitterringe 2, so dass ein Verkanten der Gitterringe 2 ausgeschlossen wird.

In den Fig. 7 und 8 ist die Feinpositionierung der Gitterringe 2 mittels der Niederhalterbleche 45, 47, wie sie in der Fig. 6 gezeigt und beschrieben ist, aus Gründen der Übersichtlichkeit nicht näher dargestellt. Sie ist aber Bestandteil der vorliegenden Fügeeinrichtung, da die Kammleisten 35 der Aufnahmevorrichtung 34 und der Einlegevorrichtung 39 lediglich eine Grobpositionierung der Gitterringe 2 vornehmen.

Somit stellt die beschriebene Fügeeinrichtung eine Universalschweißvorrichtung zur Herstellung von Schutzgittern für Axiallüfter dar. Nachdem sämtliche miteinander zu verbindenden Teile in die entsprechenden Aufnahme- und Einlegevorrichtungen 34, 39 eingelegt und die zugehörigen Niederhalter 44, 46 im Joch 40 befestigt sind, wird die Grundplatte 32 so gedreht, dass das Joch 40 sich genau über zwei sich diametral gegenüberliegenden Aufnahme- oder Einlegevorrichtungen 34, 39 befindet. Danach fährt das Joch 40 nach unten bis die Niederhalterblcche 45, 47 auf dem Gitterringen 2 aufsetzten und die erforderliche Vorspannung auf diese aufbringen. Eine über dem Joch 40 positionierte, allerdings in den Fig. 7 und 8 nicht dargestellte Laserschweißeinrichtung fährt die sich unter dem Joch 40 befindlichen Kreuzungspunkte der Gitterringe 2 mit den Flachprofilen 3 bzw. Rundstreben 6, nachfolgend Fügestellen genannt, nacheinander ab. Zum Verbinden der Gitterringe 2 mit den Rundstreben 6 muss der Laserstrahl genau mittig zwischen den von den beiden flachen Niederhalterblechen 47 gebildeten Zwischenraum auf die jeweilige Fügestelle hindurch geführt werden, während er zum Verbinden der Gitterringe 2 mit einem der beiden Flachprofile 3 durch den von einem äußeren abgewinkelten Niederhalterbleche 45 und seinem benachbarten inneren flachen Niederhalterblech 47 gebildeten Zwischenraum hindurchgeführt werden muss.

Der Laserstrahl schweißt, wie in Fig. 4 gezeigt und beschrieben, den unteren Bereich des Gitterrings 2 auf. Durch die von dem äußeren und inneren Niederhalter 44, 46 aufgebrachte Vorspannung erfolgt ein Nachsetzen des Gitterrings 2 in diesem Bereich, wobei durch die zur Fügestelle symmetrische Anordnung der Niederhalterbleche 45, 47 ein Verkanten der Gitterringe 2 vermieden wird. Nach dem Erstarren der Fügestelle fährt das Joch 40 wieder so weit nach oben, dass die Gitterringe 2 frei sind. Durch Drehung der Grundlatte 32 gelangen die nächsten beiden sich diametral gegenüberliegenden Aufnahme- oder Einlegevorrichtungen 34, 39 unter das Joch 40. Das Joch 40 fährt erneut nach unten, bringt die erforderliche Vorspannung auf die Gitterringe 2 auf und der Laserstrahl fährt erneute die unter dem Joch 40 liegenden Fügestellen ab. Diese Vorgänge werden so oft wiederholt, bis sämtliche Fügestellen geschweißt sind.

Im vorliegenden Beispiel beträgt die Teilung zum Weiterdrehen der Grundplatte 30°. Da die Tragstreben 1 aus zwei Flachprofilen 3 bestehen, fährt der Laserstrahl zum Verbinden einer Reihe Tragstreben 1 mit den Gitterringen 2 zweimal parallel versetzt die Linie der Fügestellen ab bevor die Grundplatte 32 in die nächste Schweißposition gedreht wird. Nachdem eine Reihe Tragstreben 1 geschweißt ist, werden zwei Reihen Rundstreben 2 geschweißt bevor die nächste Reihe Tragstreben 1 geschweißt wird, d. h. nach fünf Teilungsvorgängen der Grundplatte 32 sind sämtliche Gitterringe 2 mit den Tragstreben 1 und den Rundstreben 6 verbunden. Natürlich kann die Reihenfolge der Schweißvorgänge auch anders gewählt werden, z. B. dass zunächst sämtliche Flachprofile 3 mit den Gitterringen 2 verbunden werden.

Ein zusätzlicher besonderer Vorteil der Fügeeinrichtung besteht darin, dass sie als Baukastensystem für die Herstellung von Schutzgittern unterschiedlicher Größe und Gestalt ausgelegt sein kann. Hierzu werden in die Grundplatte beliebige Teilungen eingebracht, um Schutzgitter mit unterschiedlicher Anzahl und Teilung von Tragstreben 1 und Rundstreben 6 anzufertigen. Der Durchmesser der Schutzgitter kann durch unterschiedlich lange Aufnahme- und Einlegevorrichtungen 34, 39 variiert werden. Schließlich ist es durch die variable Gestaltung der inneren und äußeren Aufnahme 36, 37 sowie der Halteelemente 38 für die Tragstreben 1 bzw. Rundstreben 6 möglich, die verschiedensten die Form des Schutzgitters bestimmenden Teile in die Fügeeinrichtung zu integrieren. Dementsprechend sind dann natürlich auch die Niederhalter 44 und 46 variabel zu gestalten, lassen sich aber in jedem Fall ohne großen Aufwand in das unveränderte Joch 40 einsetzen.

In der bisherigen Beschreibung der Fügeeinrichtung wurde lediglich das Verschweißen jener Teile des Schutzgitters erläutert, die im Fügebereich eine Punkt- oder kurze Linienberührung aufweisen, nämlich der Gitterringe 2 mit den Tragstreben 1 und den Rundstreben 6. Zu Beginn der Erläuterungen zu den Fig. 7 und 8 wurde jedoch gesagt, dass das Schutzgitter mit dieser Fügeeinrichtung komplett geschweißt werden kann. Daher soll nachfolgend noch kurz zu den Schweißverbindungen ausgeführt werden, bei denen das erfindungsgemäße Verfahren nicht angewendet zu werden braucht, da die miteinander zu verbindenden Teile eine für das Laserschweißen ausreichend große Fügefläche aufweisen und auch kein störender Luftspalt vorhanden ist:
Dies betrifft die Verbindung der inneren und äußeren Enden der Flachprofile 3 mit dem inneren Flanschring 4 bzw. dem äußeren Flanschring 5. Sie können ohne Veränderung der Position der Laserschweißvorrichtung oberhalb des Jochs 40 geschweißt werden, da sie sich in oder nahe der radialen Achse der Tragstreben 1 und somit bei der Positionierung der Tragstreben 1 in Schweißposition auch immer unter dem von den Profilkörpern 41 des Jochs 40 gebildeten Zwischenraum befinden. Bei Einstellung der Grundplatte 32 auf eine Schweißposition der Tragstrebe 1 sind diese Verbindungen für den Laserstrahl zugänglich, wenn der äußere und der innere Niederhalter 44, 46 aus dem Joch entfernt ist. Anderseits ist es zum Schweißen des äußeren Flanschringes 5 natürlich auch möglich, mit der Laserschweißvorrichtung auf eine Position außerhalb des Jochs 40 zu fahren. Zum Schweißen des inneren Flanschringes 4 ist diese Variante nur möglich, wenn sich dessen Fügestelle außerhalb des Jochs 40 befindet, also sein Durchmesser größer ist als die Breite des Jochs 40.

**Bezugszeichenliste**

| | | | |
|---|---|---|---|
| 1 | Tragstrebe | 31 | Konsole |
| 2 | Gitterring | 32 | Grundplatte |
| 3 | Flachprofil | 33 | Innenflanschaufnahme |
| 4 | Innerer Flanschring | 34 | Aufnahmevorrichtung |
| 5 | Äußerer Flanschring | 35 | Rechte und linke Kammleiste |
| 6 | Rundstrebe | 36 | Innere Aufnahme |
| 7 | Fügestelle | 37 | Äußere Aufnahme |
| 8 | Niederhalter | 38 | Halteelement |
| F | Andrückkraft | 39 | Einlegevorrichtung |
| 9 | Federelement | 40 | Joch |
| 10 | Laserstrahl | 41 | Profilkörper |
| e | Nachsetzweg | 42 | Führungskörper |
| 11 | Schweißnuss | 43 | Führungswelle |
| 12 | Schweißrichtung | 44 | Äußerer Niederhalter |
| 13 | Seitenverschweißung | 45 | Abgewinkeltes Niederhalterblech |
| 14 | Niederhalter | 46 | Innerer Niederhalter |
| 15 | Elastomerband | 47 | Flaches Niederhalterblech |
| 16 | Unterteil | 48 | Halter |
| 17 | Einlegenut | | |
| 18 | Niederhalter | | |
| 19 | Zentrierphase | | |
| 20 | Fixiernut | | |
| 21 | Elastomereinlage | | |

## Patentansprüche

1. Verfahren zum Verschweißen von im Fügebereich eine Punkt- oder kurze Linienberührung aufweisenden Teilen (2, 3, 6)
- mittels eines Laserstrahls (10),
- wobei die Teile (2, 3, 6) zueinander ausgerichtet und fixiert werden,
- wobei der Laserstrahl (10) von oben und zentriert zur Fügestelle (7) in das obere Teil (2) cingebracht und so fokussiert wird, dass er lediglich einen unteren mittleren Bereich des oberen Teils unmittelbar über der Fügestelle (7) aufschmilzt,
- währenddessen das bzw. die oberen und das bzw. die unteren Teile (2, 3, 6) gegeneinander gedrückt werden, so dass sie sich beim Schweißprozess aufeinander zu bewegen, wobei der aufgeschmolzene Bereich des jeweils oberen Teils (2) in das durch den Wärmeintrag dieser Schmelze inzwischen ebenfalls aufgeschmolzene Material des jeweils unteren Teils (3, 6) eindringt.

2. Verfahren nach Anspruch 1,
**dadurch gekennzeichnet,**
**dass** der Laserstrahl (10) orthogonal auf die zu fügenden Teile (2, 3, 6) auftrifft.

3. Verfahren nach Anspruch 1,
**dadurch gekennzeichnet,**
**dass** das bzw. die oberen und das bzw. die unteren Teile (2, 3, 6) mittels Federkraft (F) gegeneinander gedrückt werden.

4. Verfahren nach einem der Ansprüche 1 bis 3,
**dadurch gekennzeichnet,**
**dass** nach dem Erstarren der Schmelze in der Fügestelle (7) zusätzlich vom Inneren des oberen Teils (2) heraus die Kehlbereiche (13) der Fügestelle (7) ein- oder mehrseitig verschweißt werden.

5. Verfahren nach einem der Ansprüche 1 bis 4,
**dadurch gekennzeichnet,**
**dass** das Laserschweißen in Kombination mit einem Scanner erfolgt, der die Koordinaten der Fügestellen (7) erfasst und den Laserstrahl (10) steuert.

6. Verfahren nach Anspruch einem der Ansprüche 1 bis 5,
**dadurch gekennzeichnet,**
**dass** die miteinander zu verbindenden Teile (2, 3, 6) zunächst nur grob zueinander positioniert werden und die Feinpositionierung im Zuge des gegeneinander Drückens der Teile (2, 3, 6) erfolgt.

## Claims

1. A method for the welding together of parts (2, 3, 6) having a point contact or short line contact in the joining region
- by means of a laser beam
- wherein the parts (2, 3, 6) are aligned and fixed relative to one another,
- wherein the laser beam (10) is introduced from above and centred relative to the joining location (7), and is focussed such that it fuses just a lower central region of the upper part directly above the joining location (7),
- at the same time the upper and lower part or parts (2, 3, 6) are pressed against one another such that in the welding process they move together, wherein the fused region of the respective upper part (2) penetrates into the material of the respective lower part (3, 6), which meanwhile is similarly fused as a result of the heat input from the said fused region.

2. The method in accordance with Claim 1,
**characterised in that**,
the laser beam (10) impinges orthogonally onto the parts (2, 3, 6) to be joined.

3. The method in accordance with Claim 1,
**characterised in that**,
the upper and lower part or parts (2, 3, 6) are pressed against one another by means of a spring force (F).

4. The method in accordance with one of the Claims 1 to 3,
**characterised in that**,
after the solidification of the fused region at the joining location (7) outwards from the interior of the upper part (2) the gutter regions (13) of the joining location (7) are in addition welded together on one or more sides.

5. The method in accordance with one of the Claims 1 to 4,
**characterised in that**,
the laser welding process takes place in combination with a scanner, which registers the coordinates of the joining locations (7) and controls the laser beam (10).

6. The method in accordance with one of the Claims 1 to 5,
**characterised in that**,
the parts (2, 3, 6) to be joined together are only approximately positioned relative to one another in the first instance, and the fine positioning takes place in the course of pressing the parts (2, 3, 6) against one another.

## Revendications

1. Procédé pour le soudage d'éléments (2, 3, 6) présentant un contact par points ou par lignes courtes dans la zone d'assemblage
- à l'aide d'un faisceau laser (10),
- les éléments (2, 3, 6) étant orientés les uns par rapport aux autres et fixés les uns aux autres,
- le faisceau laser (10) étant injecté, depuis le haut et de manière centrée par rapport au point d'assemblage (7), dans l'élément supérieur (2) et étant focalisé de manière à ce qu'il fasse fondre uniquement une zone médiane inférieure de l'élément supérieur directement au-dessus du point d'assemblage (7),
- tandis que le ou les élément(s) supérieur(s) et le ou les élément(s) inférieur(s) (2, 3, 6) sont pressés les uns contre les autres de sorte à se déplacer les uns vers les autres lors du processus de soudage, moyennant quoi la zone fondue de l'élément supérieur (2) respectif pénètre dans le matériau, lequel a également fondu dans l'intervalle du fait de l'apport de chaleur de cette masse fondue, de l'élément inférieur (3, 6) respectif.

2. Procédé selon la revendication 1, **caractérisé en ce que** le faisceau laser est incident de manière orthogonale sur les éléments (2, 3, 6) à assembler.

3. Procédé selon la revendication 1, **caractérisé en ce que** le ou les élément(s) supérieur(s) et le ou les élément(s) inférieur(s) (2, 3, 6) sont pressés les uns contre les autres à l'aide d'une force élastique (F).

4. Procédé selon l'une des revendications 1 à 3, **caractérisé en ce qu'**après la solidification de la masse fondue au point d'assemblage (7), les zones de gorge (13) du point d'assemblage (7) sont soudées de manière supplémentaire d'un ou plusieurs côtés depuis l'intérieur de l'élément supérieur (2) vers l'extérieur.

5. Procédé selon l'une des revendications 1 à 4, **caractérisé en ce que** le soudage au laser a lieu en combinaison avec un scanner, lequel détecte les coordonnées des points d'assemblage (7) et commande le faisceau laser (10).

6. Procédé selon l'une des revendications 1 à 5, **caractérisé en ce que** les éléments (2, 3, 6) à assembler les uns avec les autres sont tout d'abord seulement positionnés grossièrement les uns par rapport aux autres et **en ce que** le positionnement de précision s'effectue lors du pressage des éléments (2, 3, 6) les uns contre les autres.
